(19)

Europäisches Patentamt
European Patent Office
Office européen des brevets

(11)  **EP 4 553 455 B1**

(12)  **EUROPEAN PATENT SPECIFICATION**

(45) Date of publication and mention
of the grant of the patent:
**08.07.2026  Bulletin 2026/28**

(21) Application number: **24211642.4**

(22) Date of filing: **08.11.2024**

(51) International Patent Classification (IPC):
***G01D 5/353*** *(2006.01)*  ***G01H 9/00*** *(2006.01)*

(52) Cooperative Patent Classification (CPC):
**G01H 9/004; G01D 5/35361**

(54) **SYSTEM AND METHOD FOR RAYLEIGH-BASED  DISTRIBUTED ACOUSTING SENSING**

SYSTEM UND VERFAHREN ZUR RAYLEIGH-BASIERTEN VERTEILTEN
ERFASSUNGSBESCHAFFUNG

SYSTÈME ET PROCÉDÉ DE DÉTECTION ACOUSTIQUE DISTRIBUÉE SUR LA BASE DE LA
DIFFUSION DE RAYLEIGH

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **09.11.2023  IT 202300023607**

(43) Date of publication of application:
**14.05.2025  Bulletin 2025/20**

(73) Proprietor: **Prysmian S.p.A.
20126 Milano (IT)**

(72) Inventors:
• **VERONESE, Riccardo
Selvazzano Dentro (IT)**
• **PALMIERI, Luca
Camponogara (IT)**

(74) Representative: **Pietra, Giulia et al
Marchi & Partners S.r.l.
Via Vittor Pisani, 13
20124 Milano (IT)**

(56) References cited:
**EP-A1- 3 477 266      WO-A1-2022/229616
CN-A- 113 503 954      US-A1- 2023 073 827
US-B2- 10 203 264**

**Description**

BACKGROUND

The present disclosure relates to distributed sensing in optical fibers. In particular, the present disclosure relates to a system and method for Rayleigh-based distributed acoustic sensing.

STATE OF THE ART

It is known use of optical fibers as sensors for a variety of physical parameters, such as pressure or temperature. Furthermore, use of optical fibers enables the so-called "distributed fiber optic sensing" (DFOS), in which the physical parameter to be sensed can be continuously sensed along the fiber length.

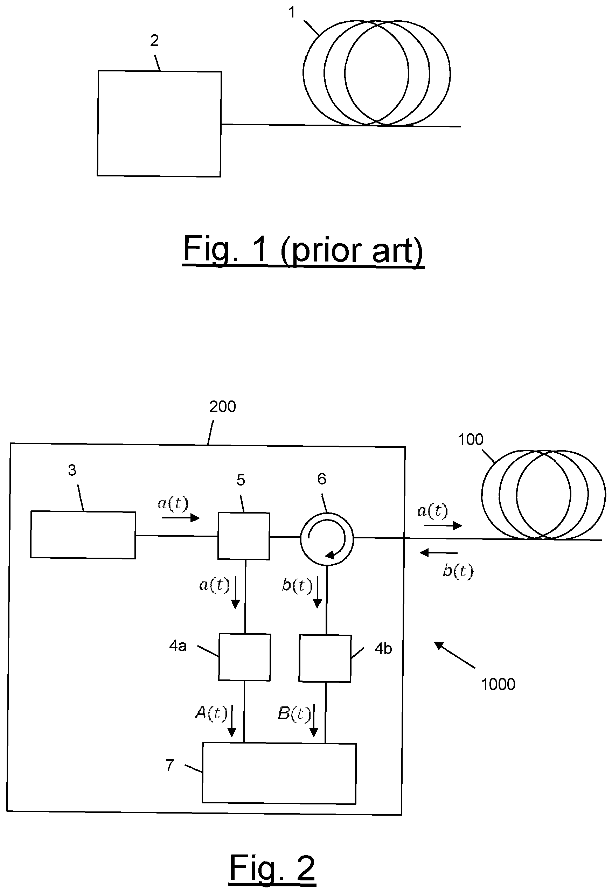

A known scheme typically used for DFOS is the so-called "single-ended" scheme, schematically depicted in Figure 1. According to the known single-ended scheme, one end of an optical fiber 1 having a transmission property susceptible to the physical parameter to be sensed is connected to an interrogator device 2. The interrogator device 2 sends a probe light signal into the optical fiber 1 and detects the corresponding response light signal transmitted back by the optical fiber 1 in response thereto. The interrogator device 2 then processes the response light signal, thereby extracting information indicative of the physical parameter to be sensed.

One specific application of DFOS is distributed acoustic sensing (DAS). DAS enables detection and localization of "acoustic events" happening in a specific position and time along a structure to be monitored. In the present description and in the claims, the expression "acoustic event" will designate a pressure change causing a localized strain (in particular, an axial strain) of the sensing optical fiber deployed along the structure to be monitored. The acoustic event may be a vibration, namely a periodic pressure change causing a localized strain of the sensing optical fiber which periodically varies over time.

Typically, DAS is based on an analysis of the response light signal which is generated by the optical fiber when the probe light signal propagating therethrough undergoes a linear, elastic backscattering, in particular Rayleigh backscattering.

Rayleigh-based DAS (RDAS) may be implemented based on several known techniques, usually known as "reflectometric techniques". Known reflectometric techniques such that the one disclosed in WO2022229616 can be divided into two main categories, according to the nature of the probe light signal exploited.

A first category of reflectometric techniques employs pulse-shaped probe light signals. More specifically, in pulse-based reflectometric techniques (such as OTDR, namely Optical Time Domain Reflectometer), a sequence of light pulses is injected in the optical fiber, and one measurement of the response light signal is performed per each injected light pulse.

A second category of reflectometric techniques instead makes use of non-pulse-shaped probe light signals. In non-pulse-based reflectometric techniques (such as OFDR, namely Optical Frequency Domain Reflectometer), the probe light signal typically is a continuous wave whose instantaneous frequency is periodically linearly swept in time, the linearity of the sweep being a requirement for the technique to be effective. For each period of the frequency linear sweep, one measurement of the response light signal is typically performed.

SUMMARY

The Applicant has noticed that the above known reflectometric techniques for RDAS exhibit some drawbacks.

In both the above known reflectometric techniques, indeed, the response light signal of the optical fiber is measured at discrete time instants equally spaced by a measurement period $\delta t_r$. According to the Nyquist-Shannon sampling theorem, the measurement period $\delta t_r$ between consecutive measurements sets an upper limit on the maximum detectable acoustic frequency as $f_a \leq f_r/2 = 1/(2\delta t_r)$, where $f_r = 1/\delta t_r$ is the measurement rate (in Hz). In the following description, the maximum detectable acoustic frequency will be also termed "acoustic bandwidth".

As far as pulse-based reflectometric techniques are concerned, for the reflectometric technique to be effective, consecutive light pulses shall be time spaced by at least one round-trip propagation time through a target sensing range $L_{max}$, which is defined as the maximum length of the optical fiber that can be interrogated. This sets a lower limit on the measurement period $\delta t_r$ namely $\delta t_r \geq 2L_{max}/c$, where $c$ is the propagation speed of light within the optical fiber. Therefore, the maximum detectable acoustic frequency scales with the target sensing range $L_{max}$ according to the following equation: $f_a \leq c/(4L_{max})$. The longer the target sensing range $L_{max}$, the lower the maximum detectable acoustic frequency. For example, for $L_{max}$ = 10 km the maximum detectable acoustic frequency is $f_a \leq$ 5 kHz, while for $L_{max}$ = 100 km the maximum detectable acoustic frequency $f_a \leq$ 500 Hz (assuming $c \simeq 2 \cdot 10^8$ m/s). Another way to look at this limitation entails considering that, as the probe light pulse propagates through the optical fiber, it illuminates only a specific fiber span at a time. Therefore, if an acoustic event happens at a position $z$ in the optical fiber that is not traversed by the probe light pulse during the time extent of the acoustic event, such an acoustic event cannot be detected, leading to the presence of an intrinsic deadtime during which the optical fiber is not monitored.

As to non-pulse-based reflectometric techniques, in this case the limit on the maximum detectable acoustic frequency $f_a$ is determined by two factors. The first one is the maximum temporal rate at which the linear sweep of the instantaneous frequency of the probe light signal can be performed. The second one is the ratio between the period of the vibration to be sensed and the period of the frequency linear sweep. More precisely, the period of the frequency linear sweep shall be shorter than the period of the vibration. On the other hand, for a given target sensing range $L_{max}$, reducing the period of the frequency linear sweep requires increasing the electrical bandwidth at detection. Owing to these requirements, implementing long-range RDAS with large acoustic bandwidth is rather challenging.

Furthermore, the way in which the linear sweep of the instantaneous frequency of the probe light signal is obtained determines the presence of intrinsic deadtime also in non-pulse-based reflectometric techniques. For example, if a tunable laser source is used to generate the probe light signal, the deadtime corresponds to the "recoiling" phase, during which the tunable laser is brought back to the initial frequency after a linear sweep is completed.

The Applicant has then faced the problem of providing a system and method for Rayleigh-based distributed acoustic sensing which overcome the aforesaid drawbacks.

In particular, the Applicant has tackled the problem of providing a system and method for Rayleigh-based distributed acoustic sensing which exhibit substantially no deadtime and a measurement period whose lower limit is substantially independent of the target sensing range $L_{max}$.

Without being bound to any theory, the Applicant has noticed that, since Rayleigh backscattering is a linear process, according to the theory of linear systems its input/output relation can be completely described in terms of a transfer function in the spectral domain, or a response function in the time domain. The time-domain response function of the optical fiber will be termed herein after also "Rayleigh response". Rayleigh-based distributed acoustic sensing may then rely on the analysis of the Rayleigh response of the optical fiber. Since the values of the Rayleigh response are complex, the analysis shall take into account both amplitude and phase of its values. Hence, if $a(t)$ is the probe light signal and $b(t)$ is the response light signal, the relation between the signals $a(t)$ and $b(t)$ in the spectral domain can be written, as:

$$b(\omega) = H(\omega)a(\omega) \qquad [1]$$

where $a(\omega) = \mathcal{F}[a(t)]$ is the spectrum of the probe light signal, $b(\omega) = \mathcal{F}[b(t)]$ is the spectrum of the response light signal and $H(w)$ is the frequency-domain Rayleigh response of the optical fiber, where $\mathcal{F}$ indicates the Fourier transform. From $H(\omega)$, the Rayleigh response of the optical fiber can be obtained through an inverse Fourier transform as:

$$h(t) = \mathcal{F}^{-1}[H(\omega)] = \mathcal{F}^{-1}[b(\omega)/a(\omega)] \qquad [2]$$

where $\mathcal{F}^{-1}$ indicates the inverse Fourier transform. The Rayleigh response may then be converted into a spatial-domain Rayleigh response, through the propagation speed of light in the optical fiber. By proper analysis of the variation of the spatial-domain Rayleigh response over time, information indicative of the acoustic event to be sensed may be obtained.

Starting from the above, the Applicant has realized that equation [2], expressed in the continuous-time domain, still holds if $H(\omega)$ is replaced with its frequency-sampled version $H(\omega_k)$, $\omega_k = \omega_0 + 2\pi k f_m$, $k \in K \subset \mathbb{Z}$ and if the inverse Fourier transform is replaced with an inverse discrete Fourier transform. In this case, a discrete-time signal $h[n \cdot dt]$ is obtained, corresponding to the sampled periodic repetition of the continuous-time function $h(t)$, $n$ being the sample index.

According to the theory of the discrete Fourier transform, the repetition period $T$ will be equal to the reciprocal of the spacing $f_m$ between the frequency-domain samples of $H(\omega_k)$, and the time-domain sampling interval $dt$ will be equal to $T/N$, $N$ corresponding to the number of samples composing $H(\omega_k)$.

In view of the above, the Applicant has realized that, by providing the probe light signal $a(t)$ in the form of a probe light signal with carrier frequency $\omega_0$, periodically modulated with a modulation period $T_m = 1/f_m$ (the modulation may be applied to one or more of the probe light signal's quantities, namely amplitude, frequency, and phase), the spectrum of the probe light signal $a(\omega)$ has discrete support $A = \{ \omega_k = \omega_0 + 2\pi k f_m, k \in K \subset \mathbb{Z} \}$, in whose points it assumes the values $a(\omega_k) \triangleq a_k$, $k \in K$.

According to the theory of linear systems, when injecting such a probe light signal into an optical fiber, also the spectrum of the corresponding response light signal $b(\omega)$ has discrete support A, in whose points it assumes the values

$$b_k \triangleq b(\omega_k) = H(\omega_k) a_k, \ k \in K.$$

Hence, by subjecting both the light signals $a(t)$ and $b(t)$ to optical coherent detection, a probe electrical signal $A(t)$ and a response electrical signal $B(t)$ are obtained, whose spectra have again discrete support $A'$, which is substantially rigidly shifted towards baseband relatively to $A$ and whose corresponding values are still $a_k$ and $b_k$ (short of a fixed scale factor). The electrical signals $A(t)$ and $B(t)$ may then be sampled with a sampling frequency $f_s$ such that $f_s = M f_m$, where $M$ is a non-zero positive integer such that $f_s \geq 2 \, \text{max} A'$, $\text{max} A'$ being the maximum value in $A'$, thereby obtaining a probe sampled signal $a[n \cdot dt]$ and a response sampled signal $b[n \cdot dt]$, where $dt = 1/f_s$ and $n$ is the sample index.

A point-wise ratio according to the right-hand side of equation [2] between the discrete Fourier transforms of the sampled signals $a[n \cdot dt]$ and $b[n \cdot dt]$ shall provide the frequency response coefficients $H(\omega_k)$, as long as the points of $A'$ are contained in the set of discrete frequencies over which the spectra of $a[n \cdot dt]$ and $b[n \cdot dt]$ are sampled by the discrete Fourier transform.

In this respect, the Applicant has noticed that such condition is fulfilled when $T = Q \cdot 1/f_m$, where $Q$ is a non-zero positive integer. In other words, this requires computing the discrete Fourier transform of the sampled signals $a[n \cdot dt]$ and $b[n \cdot dt]$ over arrays of $N = G f_s/f_m = G \cdot M$ samples, where $G$ is a non-zero positive integer. The arrays identified in the probe sampled signal $a[n \cdot dt]$ and in the response sampled signal $b[n \cdot dt]$ respectively are $\boldsymbol{a} = [a_u, \dots, a_{u+N-1}]$ and $\boldsymbol{b} = [b_v, \dots, b_{v+N-1}]$, where $u$ corresponds to the starting index from which samples of $a[n \cdot dt]$ are taken and $v$ is the starting index from which samples of $b[n \cdot dt]$ are taken. The two arrays may be time misaligned, meaning that the starting indexes $u$ and $v$ may have different values. Their discrete Fourier transform provides two arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$, respectively. The arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$ may then be restricted to those samples corresponding to values contained in $A'$ and subjected to a point-wise ratio according to the right-hand side of equation [2] above.

After the point-wise ratio has been performed, an inverse Fourier transform is applied to the result, thereby obtaining a discrete Rayleigh response $h[m \cdot dt]$ of the optical fiber. The discrete Rayleigh response $h[m \cdot dt]$ may then be converted into a discrete spatial-domain Rayleigh response $h[m \cdot dz]$, whose spatial sampling step $dz$ is provided by the following equation:

$$dz = \frac{c_0}{2(|A'|-1)f_m n_\text{g}} \qquad\qquad [3]$$

where $c_0$ is the propagation speed of light in vacuum, $n_g$ is the group refractive index in the optical fiber, $|A'|$ is the cardinality of the discrete support $A'$ of the spectra of the electrical signals $A(t)$ and $B(t)$, and the factor 2 accounts for the round-trip propagation of the probe light signal through the optical fiber.

The above discussion is still valid if arrays $\hat{\boldsymbol{a}}$ and $\hat{\boldsymbol{b}}$ are restricted to samples pertaining to a subset $A''$ of the discrete support $A'$.

The measurement of the Rayleigh response may be iterated at discrete time instants, thereby providing a sequence of measurements of the spatial-domain Rayleigh response $h[m \cdot dz]$ equally spaced in time by the iteration period, which basically represents the measurement period $\delta t_r$. Specifically, a new iteration may be performed by incrementing the values of the starting indexes $u$ and $v$ of the same positive integer amount $q \geq 1$, as long as samples of the electrical signals $A(t)$ and $B(t)$ are available. The measurement period $\delta t_r$ is then related to the sampling period $dt$ according to the following equation $\delta t_r = \delta t \cdot q$. The lower limit of the measurement period $\delta t_r$ is then $\delta t_r = \delta t$, which is obtained when $q = 1$, namely when the measurement of the Rayleigh response is repeated each time a new sample of both the probe electrical signal $A(t)$ and the response electrical signal $B(t)$ is available.

Advantageously, therefore, the lower limit of the measurement period $\delta t_r$ is substantially independent of the target sensing range $L_{max}$.

The target sensing range $L_{max}$ indeed affects the modulation frequency $f_m$ of the probe light signal, which shall be set such that $L_{max} = c/2f_m$. However, as said above, the minimum measurement period $\delta t_r$ of the Rayleigh response is equal to the sampling period $dt$, which not only is a function of the modulation frequency $f_m$ (and hence of $L_{max}$), but is also inversely proportional to the integer number $M$. Hence, in principle, by setting a suitably high value of $M$, the lower limit of the measurement period $\delta t_r$ may be arbitrarily reduced. From the practical point of view, this means that the lower limit of the measurement period $\delta t_r$ is substantially due to the processing capabilities of the data processing unit implementing the sampling and the processing of the electrical signals provided by the optical coherent detection of the probe light signal and response light signal.

The result of the procedure above, i.e. the sequence of measurements of the spatial-domain Rayleigh response $h[m \cdot dz]$ equally spaced in time by the iteration period, is then processed to obtain information indicative of the acoustic event. For this purpose, known algorithms can be applied, e.g. spectral correlation analysis or direct phase demodulation as explained for example in Z. He and Q. Liu, "Optical Fiber Distributed Acoustic Sensors: A Review," in Journal of Lightwave Technology, vol. 39, no. 12, pp. 3671-3686, 15 June, 2021, doi: 10.1109/JLT.2021.3059771.

Therefore, according to a first aspect, the present disclosure provides a system for Rayleigh-based distributed acoustic sensing of an acoustic event, the system comprising:

- an optical fiber;
- a laser source configured to inject a probe light signal $a(t)$ in the optical fiber, the probe light signal $a(t)$ being periodically modulated with a modulation frequency $f_m$;
- a first optical detector configured to perform a coherent detection of the probe light signal $a(t)$ as injected in the optical fiber, thereby providing a probe electrical signal $A(t)$, and a second optical detector configured to perform a coherent detection of a response light signal $b(t)$ emitted by the optical fiber in response to the probe light signal $a(t)$ undergoing Rayleigh backscattering through the optical fiber, thereby providing a response electrical signal $B(t)$; and
- a data processing unit configured to sample the probe electrical signal $A(t)$ and the response electrical signal $B(t)$ with a sampling frequency $f_s$ such that $f_s = M f_m$ where $M$ is a non-zero positive integer, thereby providing a probe sampled signal $a[n \cdot dt]$ and a response sampled signal $b[n \cdot dt]$; identify in the probe sampled signal $a[n \cdot dt]$ and the response sampled signal $b[n \cdot dt]$ a first array of $N$ consecutive probe samples and a second array of $N$ consecutive response samples, respectively, with $N = G \cdot M$, $G$ being a non-zero positive integer; provide a Rayleigh response of the optical fiber based on the first array of $N$ consecutive probe samples and the second array of consecutive $N$ response samples; and obtain information indicative of the acoustic event by processing the Rayleigh response of the optical fiber.

According to some embodiments, the periodically modulated probe light signal $a(t)$ is a non-pulsed shaped light signal, where "non-pulsed shaped light signal" means that the amplitude of the light signal may vanish only in a discrete set of time instants.

According to an embodiment:

- the laser source is further configured to provide the first optical detector and the second optical detector with an unmodulated light signal $c(t)$, the unmodulated light signal $c(t)$ having a carrier frequency shifted relative to a carrier frequency of the probe light signal $a(t)$; and
- the first optical detector and second optical detector are configured to perform a heterodyne coherent detection of the probe light signal $a(t)$ and the response light signal $b(t)$, respectively, using the unmodulated light signal $c(t)$.

According to an embodiment, the system further comprises two polarization controllers configured to bring the unmodulated light signal $c(t)$ on respective mutually orthogonal polarizations states, and the second optical detector comprises two optical detectors, each one operating on a respective polarization state.

According to an embodiment, the system further comprises an optical amplifier configured to increase the optical power of the probe light signal $a(t)$ before it is injected in the optical fiber.

In addition or alternatively, the system further comprises a further optical amplifier configured to increases the optical power of the response light signal $b(t)$ before it is received by the second optical detector.

According to a second aspect, the present disclosure provides a method for Rayleigh-based distributed acoustic sensing of an acoustic event, the method comprising:

(a) injecting a probe light signal $a(t)$ in an optical fiber, the probe light signal $a(t)$ being periodically modulated with a modulation frequency $f_m$;

(b) performing a coherent detection of the probe light signal $a(t)$ as injected in the optical fiber, thereby providing a probe electrical signal $A(t)$;

(c) performing a coherent detection of a response light signal $b(t)$ emitted by the optical fiber in response to the probe light signal $a(t)$ undergoing Rayleigh backscattering through the optical fiber, thereby providing a response electrical signal $B(t)$;

(d) sampling the probe electrical signal $A(t)$ and the response electrical signal $B(t)$ with a sampling frequency $f_s$ such that $f_s = M f_m$ where $M$ is a non-zero positive integer, thereby providing a probe sampled signal $a[n \cdot dt]$ and a response sampled signal $b[n \cdot dt]$;

(e) identifying in the probe sampled signal $a[n \cdot dt]$ and the response sampled signal $b[n \cdot dt]$ a first array of $N$ consecutive probe samples and a second array of $N$ consecutive response samples, respectively, with $N = G \cdot M$, $G$ being a non-zero positive integer;

(f) providing a Rayleigh response of the optical fiber based on the first array of $N$ consecutive probe samples and the second array of consecutive $N$ response samples; and

(g) obtaining information indicative of the acoustic event by processing the Rayleigh response of the optical fiber.

According to an embodiment, step (d) comprises sampling the probe electrical signal $A(t)$ and the response electrical signal $B(t)$ synchronously.

According to an embodiment, step (e) comprises identifying the first array of $N$ consecutive probe samples and the second array of $N$ consecutive response samples in a time-misaligned way.

According to an embodiment, step (f) comprises:

- applying a discrete-time Fourier transform to the first array of $N$ consecutive probe samples and to the second array of $N$ consecutive response samples, thereby obtaining arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$, respectively;
- subjecting the arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$ to a point-wise ratio, thereby obtaining a further array $\hat{\boldsymbol{c}}$; and
- applying an inverse discrete-time Fourier transform to the further array $\hat{\boldsymbol{c}}$.

According to an embodiment, subjecting the arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$ to the point-wise ratio comprises:

- constructing two restricted arrays $\hat{\boldsymbol{a}}'$ and $\hat{\boldsymbol{b}}'$ by restricting each one of the arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$ to frequency values contained in their discrete frequency-domain support; and
- obtaining the further array $\hat{\boldsymbol{c}}$ as $\hat{\boldsymbol{c}} = \hat{\boldsymbol{b}}' \oslash \hat{\boldsymbol{a}}'$ where $\oslash$ stands for Hadamard division.

According to an embodiment, step (g) comprises determining a spatial-domain Rayleigh response $h[m \cdot dz]$ of the optical fiber and obtaining the information indicative of the acoustic event based on the spatial-domain Rayleigh response $h[m \cdot dz]$.

According to an embodiment, steps (d) to (g) are periodically iterated at discrete time instants, thereby providing a sequence of spatial-domain Rayleigh responses $h[m \cdot dz]$ equally spaced in time.

According to an embodiment, the method further comprises applying a spectral correlation analysis to at least two spatial-domain Rayleigh responses $h[m \cdot dz]$ measured at different times $t_1$ and $t_2$.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the appended claims, the words "a" or "an" should be read to include one or at least one and the singular also includes the plural unless it is obvious that it is meant otherwise. This is done merely for convenience and to give a general sense of the disclosure.

The present disclosure, in at least one of the aforementioned aspects, can be implemented according to one or more of the present embodiments, optionally combined together.

BRIEF DESCRIPTION OF DRAWINGS

The present disclosure will provide further particulars in the following detailed description, given by way of example and not of limitation, with reference to the following drawings, wherein:

- Figure 1 (already described above) shows a known single-ended scheme typically used for DFOS;
- Figure 2 schematically shows a system for Rayleigh-based distributed acoustic sensing according to embodiments of the present invention;
- Figure 3 is a flow chart of the operation of the data processing unit included in the system of Figure 2, according to embodiments of the present invention;
- Figures 4A-4D show the interrogator device according to four possible variants of the present invention;
- Figure 5 shows in further detail the structure of the laser source according to an embodiment of the present invention;
- Figure 6 is a graph showing experimental results of a single measurement of the Rayleigh response provided by a system according to embodiments of the present invention;
- Figure 7 is a more detailed flow chart of the step of providing information indicative of the acoustic event to be sensed based on the Rayleigh response;
- Figure 8 is a graph showing experimentally obtained information indicative of an impulsive acoustic event; and
- Figure 9 is a graph showing experimentally obtained information indicative of a periodic acoustic event (vibration).

DETAILED DESCRIPTION

Figure 2 shows a system 1000 for Rayleigh-based distributed acoustic sensing according to embodiments of the present invention.

The system 1000 comprises an optical fiber 100 and an interrogator device 200 connected to one end of the optical fiber 100 according to a single-ended scheme.

The optical fiber 100 is deployed along a structure to be monitored (not depicted in Figure 2) and has transmission properties susceptible to variations of the strain induced by possible acoustic events (either impulsive events or vibrations) affecting the structure to be monitored. The Applicant has made positive tests using a single mode ITU-T G.652 optical fiber. The length of the optical fiber 100 may be up to 50-100 km, as an example.

The interrogator device 200 comprises a laser source 3 configured to generate a probe light signal $a(t)$ and inject it into the optical fiber 100. The probe light signal $a(t)$ is a light signal with carrier frequency $\omega_0$, periodically modulated with a modulation frequency $f_m$. The probe light signal $a(t)$ thus has a discrete frequency-domain support

$$A = \{ \omega_k = \omega_0 + 2\pi k f_m, k \in K \subset \mathbb{Z}\}$$

. The modulation may be applied to one or more of the probe light signal's quantities, namely amplitude, frequency, and phase. The modulation may be a non-linear modulation. The periodically modulated probe light signal $a(t)$ may be a non-pulsed shaped light signal, where "non-pulsed shaped light signal" means that the amplitude of the light signal may vanish only in a discrete set of time instants. The modulation frequency $f_m$ may be set according to the desired target sensing range $L_{max}$. Specifically, modulation frequency $f_m$ may be set such that $L_{max} = c/2f_m$. The carrier frequency $\omega_0$ of the probe light signal $a(t)$ may be selected within a frequency range in which the optical fiber 100 is single mode. For example, the laser source 3 has a coherence length equal to at least $2 \cdot L_{max}$.

The interrogator device 200 also comprises two optical detectors 4a 4b. Each optical detector 4a, 4b is configured to perform a coherent detection of a respective light signal. More particularly, the optical detector 4a is configured to perform a coherent detection of the probe light signal $a(t)$ as injected in the optical fiber 100, while the optical detector 4b is configured to perform a coherent detection of the response light signal $b(t)$ emitted by the optical fiber 100 in response to the probe light signal $a(t)$ undergoing Rayleigh backscattering through the optical fiber 100. Coherent detections of the probe light signal $a(t)$ and response light signal $b(t)$ result in a probe electrical signal $A(t)$ and a response electrical signal $B(t)$, respectively; both the electrical signals $A(t)$ and $B(t)$ have a discrete frequency-domain support

$$A' = \{ \omega'_k = 2\pi f_{int} + 2\pi k f_m, k \in K \subset \mathbb{Z}\}$$

, where $f_{int}$ is an intermediate frequency such that $f_{int} = |minK|f_m$.

In order to enable detection of both the probe light signal $a(t)$ and the response light signal $b(t)$, according to an embodiment the interrogator device 200 comprises an optical splitter 5 and an optical circulator 6.

The optical splitter 5 has an input connected to the output of the laser source 3 and two outputs connected to the optical detector 4a and to one of the ports of the optical circulator 6, respectively. Two further ports of the optical circulator 6 are connected to the optical fiber 100 and to the optical detector 4b, respectively. This way, the probe light signal $a(t)$ is split into two portions: one portion is sent to the optical detector 4a, while the other portion is sent to the optical fibre 100 via the optical circulator 6. Besides, the response light signal $b(t)$ provided by the optical fiber 100 is sent via the circulator 6 to the optical detector 4b. The optical splitter 5 may have a splitting ratio comprised between 85:15 and 95:5, for example 90:10, the major part of the probe light signal $a(t)$ being directed towards the optical fiber 100 via the optical circulator 6. The Applicant has made positive test using a 1x2 optical splitter 90:10 TN1550R2A1 by Thorlabs (Newton, New Jersey, USA) and a 3 port, single mode optical circulator 6015-3-APC by Thorlabs (Newton, New Jersey, USA).

The interrogator device 200 also comprises a data processing unit 7 cooperating with the optical detectors 4a, 4b. The data processing unit 7 is configured to process the probe electrical signal $A(t)$ and the response electrical signal $B(t)$ to provide information indicative of the acoustic event to be sensed.

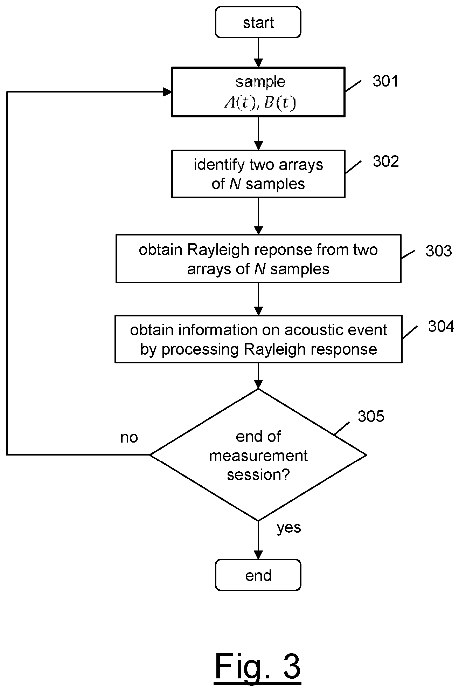

The operation of the data processing unit 7 will be now described in detail with reference to the flow chart of Figure 3.

According to an embodiment, the data processing unit 7 samples the probe electrical signal $A(t)$ and the response electrical signal $B(t)$ (step 301). For both the electrical signals $A(t)$ and $B(t)$, the sampling is performed with a sampling frequency $f_s$ such that $f_s = M f_m$ where $M$ is a non-zero positive integer such that $f_s = M f_m \geq 2 \max A'$, thereby obtaining a probe sampled signal $a[n \cdot dt]$ and a response sampled signal $b[n \cdot dt]$, where $dt = 1/f_s$ is the sampling period and $n$ is the sample index. The probe electrical signal $A(t)$ and the response electrical signal $B(t)$ may be synchronously sampled.

Then, according to an embodiment the data processing unit 7 identifies in the probe sampled signal $a[n \cdot dt]$ and in the response sampled signal $b[n \cdot dt]$ a first array $a = [a_u, \ldots, a_{u+N-1}]$ of $N$ consecutive probe samples and a second array $b = [b_v, \ldots, b_{v+N-1}]$ of $N$ consecutive response samples, respectively, where u corresponds to the starting index from which samples of $a[n \cdot dt]$ are taken and $v$ is the starting index from which samples of $b[n \cdot dt]$ are taken. The number $N$ is equal to $N = G \cdot M$, $G$ being a non-zero positive integer. The two arrays of $N$ consecutive samples may be time misaligned, meaning that the starting indexes $u$ and $v$ may have different values.

The data processing unit 7 then provides a measurement of the Rayleigh response of the optical fiber 100 based on the two arrays $a = [a_u, \ldots, a_{u+N-1}]$ and $b = [b_v, \ldots, b_{v+N-1}]$ (step 303).

According to an embodiment, at step 303 the measurement of the Rayleigh response is obtained by applying to the two arrays $a = [a_u, \ldots, a_{u+N-1}]$ and $b = [b_v, \ldots, b_{v+N-1}]$ a discrete-time Fourier transform (e.g. an FTT, Fast Fourier Transform), thereby obtaining the arrays $\hat{a} = [\hat{a}_0, \ldots, \hat{a}_{N-1}]$ and $\hat{b} = [\hat{b}_0, \ldots, \hat{b}_{N-1}]$. The arrays $\hat{a} = [\hat{a}_0, \ldots, \hat{a}_{N-1}]$ and $\hat{b} = [\hat{b}_0, \ldots, \hat{b}_{N-1}]$ are then subjected to a point-wise ratio according to the right-hand side of equation [2] above. For this purpose, according to an embodiment, two further arrays $\hat{a}'$ and $\hat{b}'$ are constructed, respectively from $\hat{a} = [\hat{a}_0, \ldots, \hat{a}_{N-1}]$ and $\hat{b} = [\hat{b}_0, \ldots, \hat{b}_{N-1}]$. Firstly, a contiguous subset $K' \subseteq K$ may be chosen; the first part of $\hat{a}'$ is constructed taking $(\max K' + 1)$ samples from $\hat{a}$, one each $G$ samples, starting from $\hat{a}_0$ towards $\hat{a}_{N-1}$ (e.g. $[\hat{a}_0, \hat{a}_G, \hat{a}_{2G}, \ldots]$). The second part of $\hat{a}'$ is constructed taking $|minK'|$

samples, one each $G$ samples, starting $\hat{a}_{N-G\,|\min K'|}$ towards $\hat{a}_{N-1}$. The same procedure is applied to $\hat{\boldsymbol{b}} = [\hat{b}_0, \ldots, \hat{b}_{N-1}]$ to obtain the further array $\hat{\boldsymbol{b}}'$. This way, the arrays $\hat{\boldsymbol{a}}'$ and $\hat{\boldsymbol{b}}'$ basically are restricted to points corresponding to frequency values contained in their discrete frequency-domain support.

Then, an array $\hat{\boldsymbol{c}}$ is calculated as $\hat{\boldsymbol{c}} = \hat{\boldsymbol{b}}' \oslash \hat{\boldsymbol{a}}'$ where $\oslash$ stands for Hadamard division. The array $\hat{\boldsymbol{c}}$ is then subjected to an inverse discrete-time Fourier transform (e.g. an IFFT, Inverse Fast Fourier Transform), thereby obtaining a time-domain Rayleigh response $h[m \cdot dt]$ of $|K'|$ samples, corresponding to the spatial-domain Rayleigh response $h[m \cdot dz]$ of the optical fiber 100. The spatial sampling step $dz$ is equal to $dz = L_{max}/(|K'| - 1)$.

The data processing unit 7 then processes the spatial-domain Rayleigh response $h[m \cdot dz]$ to provide information indicative of the acoustic event to be sensed (step 304). Further details on this step will be provided herein below.

While the data processing unit 7 continuously receives the electrical signals $A(t)$ and $B(t)$ from the optical detectors 4a and 4b and samples them, the measurement of the Rayleigh response as per steps 302-304 may be iterated at discrete time instants, until end of the measurement session (step 305). Such iterations result in a sequence of measurements of the spatial-domain Rayleigh response $h[m \cdot dz]$ equally spaced in time by the iteration period, which basically represents the measurement period $\delta t_r$. Specifically, a new iteration may be performed by incrementing the values of the starting indexes $u$ and $v$ of the same positive integer amount $q \geq 1$, as long as samples of the electrical signals $A(t)$ and $B(t)$ are available. The measurement period $\delta t_r$ is then related to the sampling period $dt$ according to the following equation $\delta t_r = \delta t \cdot q$. The lower limit of the measurement period $\delta t_r$ is then $\delta t_r = \delta t$, which is obtained when $q = 1$, namely when steps 302-304 are repeated each time a new sample of both the probe electrical signal $A(t)$ and the response electrical signal $B(t)$ is available.

Advantageously, therefore, the lower limit of the measurement period $\delta t_r$ is substantially independent of the target sensing range $L_{max}$.

The target sensing range $L_{max}$ indeed affects the modulation frequency $f_m$ of the probe light signal, which shall be set such that $L_{max} = c/2f_m$. However, as said above, the minimum measurement period $\delta t_r$ of the Rayleigh response is equal to the sampling period $dt$, which not only is a function of the modulation frequency $f_m$ (and hence of $L_{max}$), but is also inversely proportional to the integer number $M$. Hence, in principle, by setting a suitably high value of $M$, the lower limit of the measurement period $\delta t_r$ may be arbitrarily reduced. From the practical point of view, this means that the lower limit of the measurement period $\delta t_r$ is substantially due to the processing capabilities of the data processing unit implementing the sampling and the processing of the electrical signals provided by the optical coherent detection of the probe light signal and response light signal.

Herein below, some variants of the interrogator device 200 will be described.

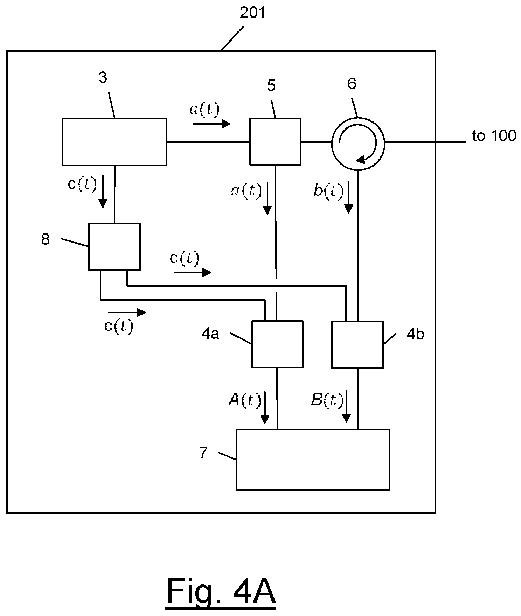

Figure 4A shows an interrogator device 201 according to a first variant.

According to the first variant, in addition to the probe light signal $a(t)$, the laser source 3 of the interrogator device 201 is also configured to provide an unmodulated light signal $c(t)$. The coherence length of the unmodulated light signal $c(t)$ may be equal to at least $2 \cdot L_{max}$. The carrier frequency of the unmodulated light signal $c(t)$ may be selected within a frequency range in which the optical fiber 100 is single mode. The carrier frequency of the unmodulated light signal $c(t)$ may be shifted by a frequency shift $f_{int}$ relative to the carrier frequency of the probe light signal $a(t)$. The frequency shift $f_{int}$ for example is in the RF range and such that $f_{int} \geq |\min K| f_m$. The frequency shift can be, for example, in the range 100-500 MHz. According to an embodiment, the probe light signal $a(t)$ and the unmodulated light signal $c(t)$ are emitted through separate outputs of the laser source 3.

According to the first variant, the interrogator device 201 also comprises a further optical splitter 8. The further optical splitter 8 has an input connected to the output of laser source 2 through which the unmodulated light signal $c(t)$ is emitted, and two outputs connected to the optical detectors 4a, 4b. The optical splitter 8 may be a 50:50 optical splitter. The Applicant has made positive tests using an optical splitter TN1550R5A1 by Thorlabs (Newton, New Jersey, USA).

According to the first variant, the optical detectors 4a, 4b use the unmodulated light signal $c(t)$ to perform a heterodyne coherent detection of the light signals $a(t)$ and $b(t)$ respectively, as it will be described in further detail herein below. More specifically, each optical detectors 4a, 4b may comprise an optical coupler 2x2 and a photodiode. The optical coupler 2x2 may be a 50:50 coupler, whose inputs receive the unmodulated light signal $c(t)$ and the light signal $a(t)$ or $b(t)$, respectively, and whose outputs provide the received light signals to the photodiode. The Applicant has made positive tests using, for each optical detector 4a, 4b, one C-band 50:50, 2x2 single mode optical coupler TN1550R5A2 by Thorlabs (Newton, New Jersey, USA) and a balanced photodiode PDB-480C-AC by Thorlabs (Newton, New Jersey, USA).

Within each optical detector 4a, 4b, each light signal $a(t)$, $b(t)$ may be heterodyned with the unmodulated light signal $c(t)$. The spectrum of each resulting electrical signal $A(t)$, $B(t)$ has therefore discrete frequency-domain support

$$A' = \{ \omega'_k = 2\pi f_{int} + 2\pi k f_m, k \in K \subset \mathbb{Z} \}.$$ Such electrical signals are then sampled by the data processing unit 7 as described above, so as to provide the probe sampled signal $a[n \cdot dt]$ and the response sampled signal $b[n \cdot dt]$. The data processing unit 7 then may subject the sampled signals $a[n \cdot dt]$, $b[n \cdot dt]$ to a digital quadrature demodulation, to provide a baseband representation of such signals, i.e. having discrete frequency-domain support

$$A'' = \{ \omega''_k = 2\pi k f_m, \, k \in K \subset \mathbb{Z} \}$$ . The sampled signals $a[n \cdot dt]$, $b[n \cdot dt]$ are then subjected to the processing according to steps 302-304 described above.

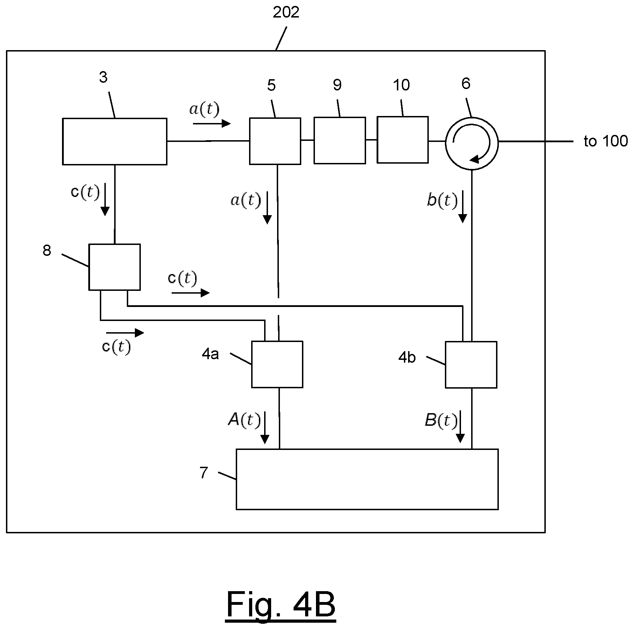

Figure 4B shows an interrogator device 202 according to a second variant.

In addition to the components of the interrogator device 201 according to the first variant, the interrogator device 202 according to the second variant also comprises an optical amplifier 9 interposed between the optical splitter 5 and the optical circulator 6. The optical amplifier 9 increases the optical power of the probe light signal $a(t)$. The optical amplifier 9 may be an Erbium-doped fiber amplifier (EDFA). Optionally, the optical amplifier 9 may be followed by an optical filter 10, in particular a bandpass optical filter. The optical amplifier 9 advantageously increases the optical power of the probe light signal $a(t)$ and then allows increasing the target sensing range $L_{max}$ of the optical fiber 100.

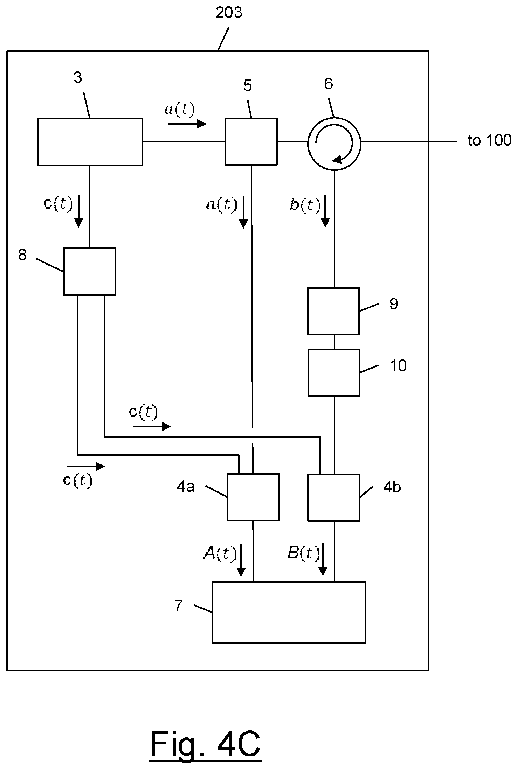

Figure 4C shows an interrogator device 203 according to a third variant.

Differently from the interrogator device 202 according to the first variant, in the interrogator device 203 according to the third variant the optical amplifier 9 and the optional optical filter 10 are interposed between the circulator 6 and the optical detector 4b. In this case, the optical amplifier 9 advantageously increases the optical power of the response light signal $b(t)$ before it is received by the optical detector 4b, and then allows increasing the target sensing range $L_{max}$ of the optical fiber 100.

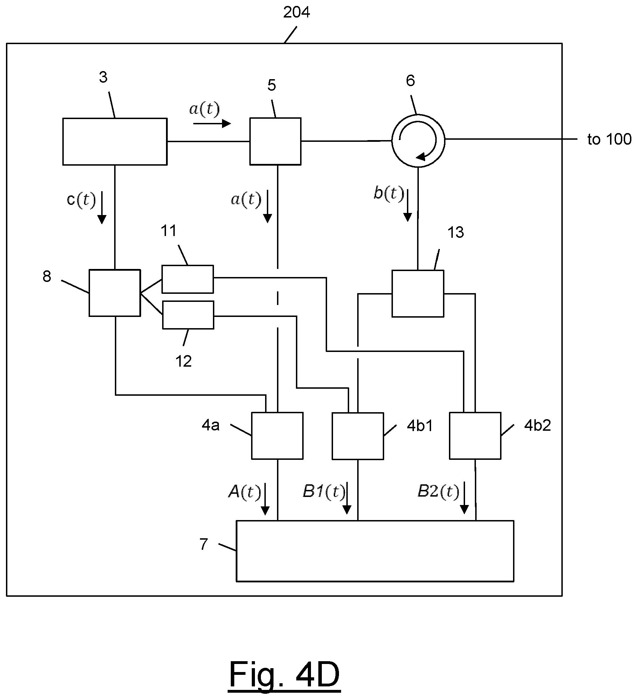

Figure 4D shows an interrogator device 204 according to a fourth variant.

The fourth variant implements a coherent polarization-diversity scheme. Hence, in addition to the components of the interrogator device 201 according to the first variant, the interrogator device 204 according to the fourth variant comprises two polarization controllers 11 and 12 connected to respective outputs of the optical splitter 8. Such polarization controllers 11 and 12 are configured to bring the unmodulated light signal $c(t)$ on respective mutually orthogonal polarizations states. Instead of the optical detector 4b, two optical detectors 4b1 and 4b2 are provided, each one operating on a respective polarization state. Between the circulator 6 and the optical detectors 4b1 and 4b2, a polarization beam splitter 13 is provided, which separates the two polarization states of the response light signal $b(t)$ and provides each one of them to a respective optical detectors 4b1 and 4b2 for separate heterodyne detection, which results into two separate response electrical signals $B1(t)$ and $B2(t)$. Each response electrical signal $B1(t)$ and $B2(t)$ is then separately subjected to the processing according to steps 301-304 of the flow chart of Figure 3. The processing results in a couple of Rayleigh responses, one per each polarization state. This may be beneficial in providing additional information on the acoustic event to be sensed.

The above variants may be reciprocally combined.

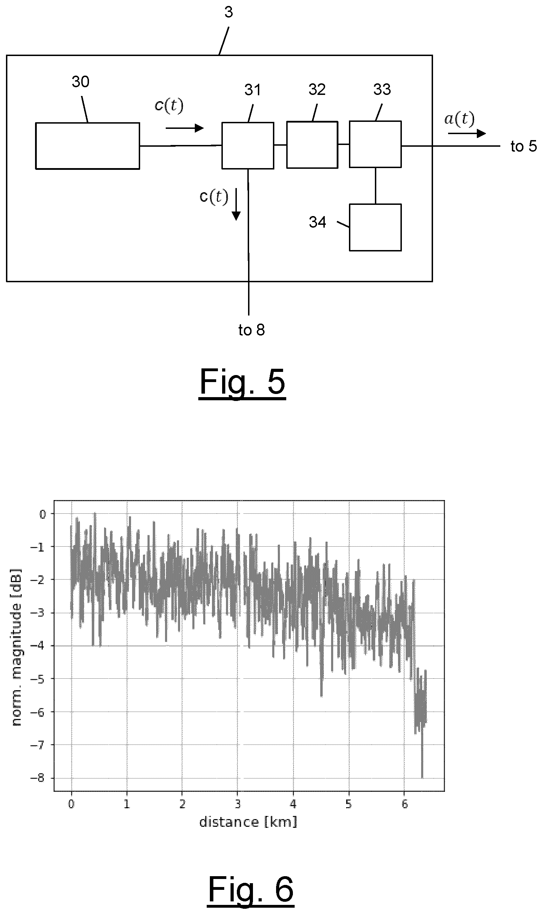

Figure 5 shows in further detail the laser source 3 comprised in the interrogator device 201, 202, 203, 204.

The laser source 3 for example comprises a CW laser 30, an optical splitter 31, a frequency shifter 32, an optical wave modulator 33 and a RF signal generator 34.

The CW laser 30 for example is configured to emit the unmodulated light signal $c(t)$. The optical frequency of the CW laser 30 may be comprised in the optical C-band, which ranges from 1530 nm to 1565 nm. The Applicant has made positive tests using a CW laser source Koheras Adjustik X15 HP by NKT Photonics (Birkeroed, Denmark).

The optical splitter 31 has an input connected to the output of the CW laser 30 so as to split the unmodulated light signal $c(t)$ into two portions. The splitting ratio of the optical splitter 31 may be comprised between 85:15 and 95:5, for example 90:10. The optical splitter 31 has two outputs: one output (the one emitting the major part of the unmodulated light signal $c(t)$) is connected to the frequency shifter 32, while the other output (the one emitting the minor part of the unmodulated light signal $c(t)$) is connected to the input of the optical splitter 8, which further splits the minor part of the unmodulated light signal $c(t)$ and provides each part to a respective optical detector 4a, 4b, which uses it to perform heterodyne demodulation, as described above. The Applicant has made positive tests using a 1x2 optical splitter 90:10 TN1550R2A1 by Thorlabs (Newton, New Jersey, USA).

The frequency shifter 32 is configured to shift the optical frequency of the major part of the unmodulated light signal $c(t)$ by the frequency shift $f_{int}$. The Applicant has made positive tests using the acousto-optic modulator FIBER-Q T-M110-0.2C2J-3-F2S (FS).

The optical wave modulator 33 is configured to modulate the output of the frequency shifter 32 with a modulation frequency $f_m$, so as to provide the probe light signal $a(t)$. As discussed above, the modulation may be applied to one or more of the light signal's quantities, namely amplitude, frequency, and phase. The Applicant has made positive tests using the optical phase modulator LN81S-FC (MOD) by Thorlabs (Newton, New Jersey, USA).

The Applicant has made some tests using, as optical fiber 100, an optical fiber link of length $L \simeq 6.1$ km, composed of two connected spools of single mode ITU-T G.652 optical fiber, whose lengths were respectively equal to 4.8 km and 1.3 km.

The graph in Figure 6 shows the results of a single measurement of the spatial-domain Rayleigh response $h[m \cdot dz]$ obtained by a single iteration of steps 302-304 described above. The following parameters were applied:

- $f_m$ = 10 kHz, corresponding to $L_{max} \simeq 10.225$ km with a group index $n_g$ = 1.466;

- $f_s$ = 500 MHz, corresponding to $M$ = 50000;
- $G$ = 2;
-

$$X_1 = X_2 = 3M = 150000;$$

- $u = v = M$; and
- $|K'|$ = 5393, corresponding to $dz \simeq$ 1.9 m.

In the graph in Figure 6, the abscissa axis represents the position $z$ along the optical fiber 100, while the ordinate axis represents the normalized magnitude in dB of the spatial-domain Rayleigh response $h[m \cdot dz]$. In order to reduce the detrimental visual effect of coherent Rayleigh fading, a 20-m-long moving average filter (11 samples) has been applied to the magnitude.

As discussed above, the measurement of the spatial-domain Rayleigh response $h[m \cdot dz]$ may be repeated at discrete time instants, thereby providing a sequence of measurements of the spatial-domain Rayleigh response $h[m \cdot dz]$ equally spaced in time by the measurement period $\delta t_r$.

As mentioned above, the data processing unit 7 processes the spatial-domain Rayleigh response $h[m \cdot dz]$ to provide information indicative of the acoustic event to be sensed (step 304 in the flow chart of Figure 3).

According to an embodiment, the data processing unit 7 processes the spatial-domain Rayleigh response $h[m \cdot dz]$ by applying a spectral correlation analysis (SCA), which allows identifying a variation of the strain applied to a section $Z$ of the optical fiber 100 between two different times $t_1$ and $t_2$. More specifically, the spatial-domain Rayleigh response $h[m \cdot dz]$ is measured at times $t_1$ and $t_2$. Then, the two measurements of the spatial-domain Rayleigh responses $h[m \cdot dz]$ are windowed to select only the spatial points pertaining to the section Z, thereby obtaining two arrays $h1$ and $h2$. The spectra of the arrays $h1$ and $h2$ are then computed and cross-correlated, as explained in S. T. Kreger et al.: "High Resolution Distributed Strain or Temperature Measurements in Single-and Multimode Fiber Using Swept-Wavelength Interferometry", Optical Fiber Sensors (p. ThE42), Cancun, Mexico.

According to the spectral shift property of the Rayleigh response, whenever a variation $\Delta\varepsilon \neq 0$ of the applied strain occurs between times $t_1$ and $t_2$, the spectral cross-correlation exhibits a peak at a frequency lag $\Delta f \propto \Delta\varepsilon \neq 0$. On the other hand, if no variation of the strain occurs between times $t_1$ and $t_2$, the spectral cross-correlation exhibits a peak at $\Delta f = 0$. Hence, performing this analysis e.g. over a spatial partition of the whole optical fiber 100 allows to monitor the change of strain in a distributed fashion along the whole length of the optical fiber 100. Furthermore, by continuously extracting the Rayleigh response of the optical fiber 100, such an analysis can be iterated in time, e.g. keeping the time instant $t_1$ fixed as a reference time and moving the time instant $t_2$ forward.

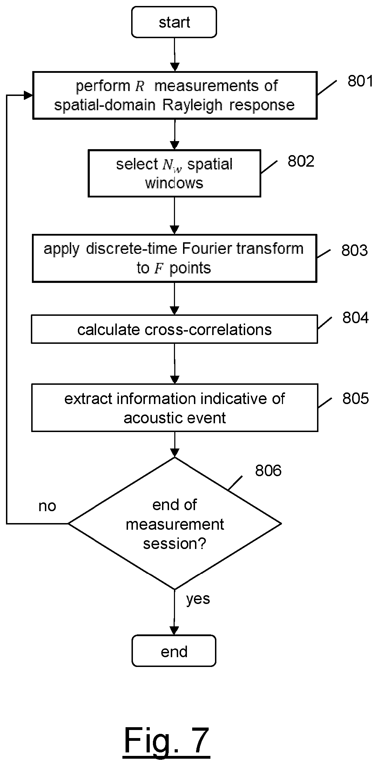

More specifically, with reference to the flow chart of Figure 7, according to embodiments of the present invention, the data processing unit 7 performs the following processing.

First of all, the data processing unit 7 performs R measurements of the spatial-domain Rayleigh response, by repeating steps 302-304 above R times (step 801). The dataset obtained by the data processing unit 7 at step 801 may be represented as a $Rx|K'|$ matrix $H = [h_{r,m}]$, where the first index identifies the measurement time as $t_r = r\,q\,dt$ and the second index identifies a spatial sample within the spatial-domain Rayleigh response, so that $m \in [0, ..., |K'| - 1]$.

Then, the data processing unit 7 selects $N_w$ spatial windows of sample length $L_w$ along the second index of $H$, producing the 3-dimensional data matrix $HH = [h_{r,p,w}]$, where $p \in [0, ..., N_w - 1]$ and $w \in [0, ..., L_w - 1]$. In this case, the second index indicates a specific spatial window and is represented by p. Hence, the new third index w identifies a spatial sample within the $p^{th}$ window.

Then, the data processing unit 7 applies a discrete-time Fourier transform to F points ($F \geq L_w$) along the third axis of the matrix $HH = [h_{r,p,w}]$, thus providing the matrix $\widehat{HH} = \left[\hat{h}_{r,p,f}\right]$, where $f \in [0, ..., F - 1]$ (step 803).

Then, the data processing unit 7 choses a reference spatial-domain Rayleigh response with index $r^*$ and, for each value of the index $r$ other than $r$ and for every value of $p$, calculates a cross-correlation according to the following equation:

$$\widehat{HH}_{r^*,p} \star \widehat{HH}_{r,p}(l) \qquad\qquad [5]$$

where $\widehat{HH}_{x,y}$ is the array $[\hat{h}_{x,y,f} \,\forall f \in [0, ..., F - 1]$ and $\star$ stands for cross-correlation of two discrete sequences with lag $l$.

This operation provides a 3-dimensional data matrix $\widehat{XX} = \left[\hat{x}_{r,p,l}^{r^*}\right]$ where the superscript $r^*$ identifies the reference spatial-domain Rayleigh response and the third subscript $l$ indicates the cross-correlation lag (step 804).

Then, the data processing unit 7 extracts information indicative of the acoustic event to be sensed from

$$\widehat{XX} = \left[\hat{x}_{r,p,l}^{r^*}\right]$$ , as it will be discussed in further detail herein below (step 805).

Then, the data processing unit 7 reverts to step 801, thereby acquiring a new $R$'x|$K$'| dataset $\mathbf{H} = [h_{r',m}]$, $r' \in [R, ..., R + R' - 1]$ to which the processing according to steps 802-805 is applied. The iterations of steps 801-805 thus enable a continuous monitoring of the optical fiber 100, until the end of the measurement session (step 806).

The Applicant has performed some tests of the above procedure for processing the spatial-domain Rayleigh response $h[m \cdot dz]$ to provide information indicative of acoustic events of different types.

A first type of acoustic event considered were impulsive events. Specifically, the system capability to sense two 25-$\mu$s-long pulses, spaced by 1.25 ms was tested.

The tested optical fiber 100 was composed by two spools of standard ITU-T G.652 optical fiber, of lengths respectively equal to 4.8 km and 1.3 km, connected through a fiber stretcher.

The following parameters were applied for each single measurement of the spatial-domain Rayleigh response according to the flow chart of Figure 3:

- $f_m$ = 10 kHz, corresponding to $L_{max} \simeq$ 10.225 km with a group index $n_g$ = 1.466;
- $f_s$ = 500 MHz, corresponding to $M$ = 50000;
- $G$ = 1;
-

$$X_1 = X_2 = 35M = 1.75 \ 10^6;$$

- $u = v = M$;
- |$K$'| = 5393, corresponding to $dz \simeq$ 1.9 m; and
- $q$ = 2500, corresponding to $f_r$ = 200 kHz.

As to the spectral correlation analysis of the measurements of the spatial-domain Rayleigh response, the following parameters were applied:

- $L_w$ = 128;
- $N_w$ = 746 windows with a relative shift of 4 samples each;
- $F$ = 128; and
- $r^*$ = 140.

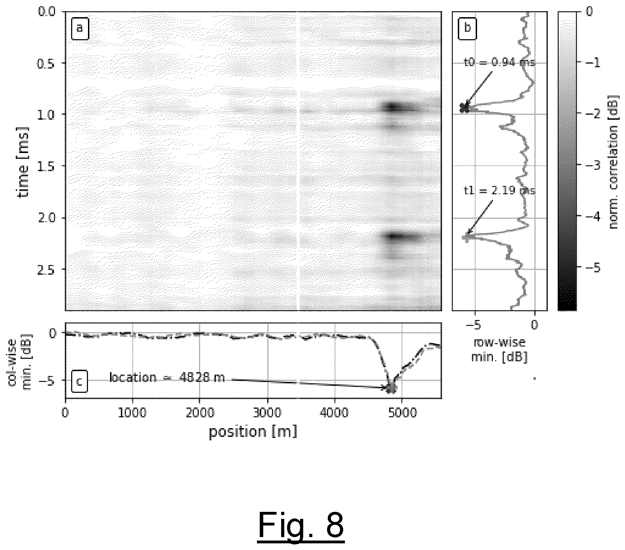

Figure 8 is a graph which shows the magnitude of the two-dimensional matrix $\left[\hat{x}_{r,p,l=0}^{r^*}\right]$, obtained from $\widehat{XX}_{r^*}$ by fixing the correlation lag $l$ to $l = 0$. The starting coordinate of the spatial window ($p$, i.e. the distance along the optical fiber 100) is reported on the abscissa axis, time ($r$) is set forth on the ordinate axis, and the normalized correlation value for lag $l = 0$ is represented through the gray scale. Only windows completely pertaining to the optical fiber 100 have been selected; normalization has been performed with respect to the plane's maximum magnitude.

The time localization of the two acoustic events can be performed by inspecting the row-wise minimum of the plane's magnitude. Such a curve is reported in subplot b of Figure 8; two time indices $r_0$ and $r_1$ (corresponding to times $t_0 = r_0/f_r$ and $t_1 = r_1/f_r$) are identified as the two local minima, highlighted by the two markers and corresponding to $t_0 = 0.94$ ms and $t_1 = 2.19$ ms.

The spatial identification of the two acoustic events can be instead performed inspecting the two one-dimensional arrays $\left[\hat{x}_{r=r_0,p,l=0}^{r^*}\right]$ and $\left[\hat{x}_{r=r_1,p,l=0}^{r^*}\right]$, obtained from $\widehat{XX}_{r^*}$ by fixing the correlation lag to $l = 0$ and the time index to $r = r_0, r_1$. The two curves are reported in subplot c of FIG.8 respectively as dotted-dashed and dashed lines. The location of the acoustic events can be obtained as the global minimum of the two curves, corresponding, in both cases, to $z \simeq 4826$ m.

It has to be noted that the two acoustic events occurring at the same spatial position along the optical fiber 100 can be detected even if their time distance is not an integer multiple of the measurement period of an equivalent pulse-based RDAS system such as OTDR.

A second type of acoustic event considered were periodic acoustic events, namely vibrations. Specifically, the system capability to sense a vibration having an acoustic frequency of $f_p$ = 5100 Hz was tested.

The optical fiber 100 was composed by two spools of standard ITU-T G.652 optical fiber, of lengths respectively equal to 4.8 km and 1.3 km, connected through a fiber stretcher.

The following parameters were applied for each single measurement of the spatial-domain Rayleigh response according to the flow chart of Figure 3:

- $f_m$ = 10 kHz, corresponding to $L_{max} \simeq$ 10.225 km with a group index $n_g$ = 1.466;
- $f_s$ = 500 MHz, corresponding to $M$ = 50000;
- $G$ = 1;
-

$$X_1 = X_2 = 35M = 1.75\ 10^6;$$

- $u = v = M$;
- $|K'|$ = 5393, corresponding to $dz \simeq$ 1.9 m; and
- $q$ = 2500, corresponding to $f_r$ = 200 kHz.

As to the spectral correlation analysis of the measurements of the spatial-domain Rayleigh response, the following parameters were applied:

- $L_w$ = 45;
- $N_w$ = 746 windows with a relative shift of 4 samples each;
- $F = 45;$ and
- $r^*$ = 140.

In this case, a two-dimensional matrix $\left[\hat{x}_{r,p,l=0}^{r^*}\right]$ may be obtained from $\widehat{XX}_{r^*}$ by fixing the correlation lag $l$ to $l$ = 0.

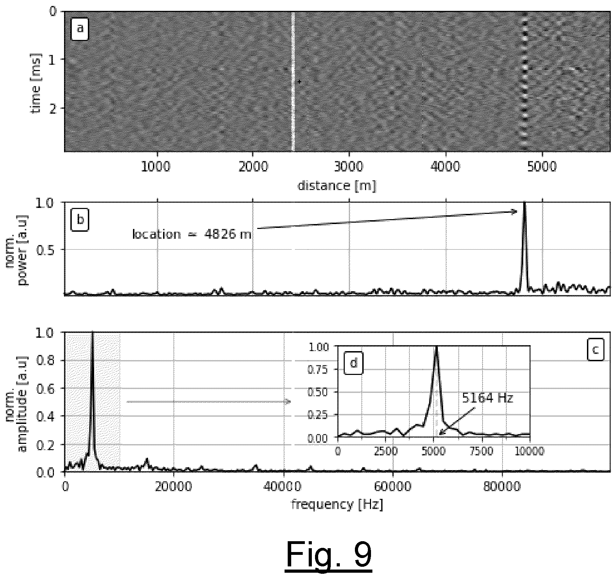

Figure 9(a) shows the phase difference between the matrixes $\left[\hat{x}_{r,p,l=0}^{r^*}\right]$ and $\left[\hat{x}_{r,p+P,l=0}^{r^*}\right]$ for $P$ = 6. The starting coordinate of the spatial window ($p + P$, i.e. the distance along the optical fiber 100) is reported on the abscissa axis, time ($r$) is reported on the ordinate axis, and the phase of the correlation value for lag $l$ = 0 is represented through the gray scale. Only differences between windows completely pertaining to the optical fiber 100 have been selected.

The spatial localization of the vibration can be performed by computing the power of the phase signal along time per each spatial window (i.e. column-wise). The curve obtained is shown in Figure 9(b), normalized with respect to its own maximum distance is reported on the x-axis, amplitude on the y-axis. The spatial location of the vibration may be identified as the global maximum of the curve and corresponds to an index $p_0 + P$ which in turn represents position $z_0 \simeq$ 4826 m within the optical fiber 100.

To determine the frequency of the vibration, the phase of the one-dimensional array $\left[\hat{x}_{r,p=p_0 + P,l=0}^{r^*}\right]$ may be extracted and a spectral analysis performed, e.g. through FFT. The obtained magnitude is set forth in Figure 9(c). In this graph, frequency is reported on the abscissa axis and normalized amplitude on the ordinate axis; normalization is performed with respect to the maximum value. This graph allows to identify the perturbation frequency as $\hat{f}_p \simeq$ 5164 Hz, corresponding to the sampled frequency closest to the actual perturbation frequency $f_p$ = 5100 Hz. It has to be noted that, with an equivalent known pulse-based RDAS system, the upper limit on the maximum detectable acoustic frequency for the tested distance length $L_{max} \simeq$ 10.225 km would have been 5000 Hz, assuming group index $n_g$ = 1.466.

The system 1000 according to the various embodiments of the present invention therefore is advantageous in that it exhibits substantially no deadtime and a measurement period whose lower limit is substantially independent of the target sensing range $L_{max}$. It can therefore be used for a variety of applications, including for example:

- detecting and localizing acoustic events induced by electric breakdowns in power cables. In this respect, the increased acoustic bandwidth of the system 1000 relative to known interferometric techniques increases the sensitivity of the system and its effectiveness in assisting search and repair of the breakdowns;
- detecting time and position of lightning striking along overhead lines;
- measuring the spectrum of acoustic events due to underwater leaks in pipelines, thereby facilitating their recognition and classification;
- measuring the acoustic waves reflected in geological monitoring, allowing higher frequency sensitivity;
- identifying fluid cavitation along pipelines;
- measuring vibration modes of overhead lines under wind perturbation, and calculating their mass thereof, this being a measure of accumulated ice; and
- measuring vibration spectrum of remote equipment and early detect mechanical degradation from spectrum variation, for example sensitive equipment like pumps in nuclear power plants.

**Claims**

1. A system (1000) for Rayleigh-based distributed acoustic sensing of an acoustic event, the system (1000) comprising:

   - an optical fiber (100);
   - a laser source (3) configured to inject a probe light signal ($a(t)$) in the optical fiber (100), the probe light signal ($a(t)$) being a light signal periodically modulated with a modulation frequency $f_m$; **characterized in that** it further comprises
   - a first optical detector (4a) configured to perform a coherent detection of the probe light signal ($a(t)$) as injected in the optical fiber (100), thereby providing a probe electrical signal ($A(t)$), and a second optical detector (4b) configured to perform a coherent detection of a response light signal ($b(t)$) emitted by the optical fiber (100) in response to the probe light signal ($a(t)$) undergoing Rayleigh backscattering through the optical fiber (100), thereby providing a response electrical signal ($B(t)$); and
   - a data processing unit (7) configured to sample the probe electrical signal ($A(t)$) and the response electrical signal ($B(t)$) with a sampling frequency $f_s$ such that $f_s = M f_m$ where $M$ is a non-zero positive integer, thereby providing a probe sampled signal $a[n \cdot dt]$ and a response sampled signal $b[n \cdot dt]$; identify in the probe sampled signal $a[n \cdot dt]$ and the response sampled signal $b[n \cdot dt]$ a first array of $N$ consecutive probe samples and a second array of $N$ consecutive response samples, respectively, with $N = G \cdot M$, $G$ being a non-zero positive integer; provide a Rayleigh response of the optical fiber (100) based on the first array of $N$ consecutive probe samples and the second array of consecutive $N$ response samples; and obtain information indicative of the acoustic event by processing the Rayleigh response of the optical fiber (100).

2. The system (1000) according to claim 1, wherein:

   - the laser source (3) is further configured to provide the first optical detector (4a) and the second optical detector (4b) with an unmodulated light signal ($c(t)$), the unmodulated light signal ($c(t)$) having a carrier frequency shifted relative to a carrier frequency of the probe light signal ($a(t)$); and
   - the first optical detector (4a) and second optical detector (4b) are configured to perform a heterodyne coherent detection of the probe light signal ($a(t)$) and the response light signal ($b(t)$), respectively, using the unmodulated light signal ($c(t)$).

3. The system (1000) according to claim 2, wherein it further comprises two polarization controllers (11, 12) configured to bring the unmodulated light signal ($c(t)$) on respective mutually orthogonal polarizations states, and wherein the second optical detector (4b) comprises two optical detectors (4b1, 4b2), each one operating on a respective polarization state.

4. The system (1000) according to any of the preceding claims, wherein it further comprises an optical amplifier (9) configured to increase the optical power of the probe light signal ($a(t)$) before it is injected in the optical fiber (100).

5. The system (1000) according to any of the preceding claims, wherein it further comprises a further optical amplifier (9) configured to increases the optical power of the response light signal ($b(t)$) before it is received by the second optical detector (4b).

6. The system (1000) according to any of the preceding claims, wherein the probe light signal ($a(t)$) being a light signal periodically modulated with non-linear modulation.

7. A method for Rayleigh-based distributed acoustic sensing of an acoustic event, the method comprising:

   (a) injecting a probe light signal ($a(t)$) in an optical fiber (100), the probe light signal ($a(t)$) being a light signal periodically modulated with a modulation frequency $f_m$;
   (b) performing a coherent detection of the probe light signal ($a(t)$) as injected in the optical fiber (100), thereby providing a probe electrical signal ($A(t)$));
   (c) performing a coherent detection of a response light signal ($b(t)$) emitted by the optical fiber (100) in response to the probe light signal ($a(t)$) undergoing Rayleigh backscattering through the optical fiber (100), thereby providing a response electrical signal ($B(t)$);
   (d) sampling the probe electrical signal ($A(t)$) and the response electrical signal ($B(t)$) with a sampling frequency $f_s$ such that $f_s = M f_m$ where $M$ is a non-zero positive integer, thereby providing a probe sampled signal $a[n \cdot dt]$ and a response sampled signal $b[n \cdot dt]$;

(e) identifying in the probe sampled signal $a[n \cdot dt]$ and the response sampled signal $b[n \cdot dt]$ a first array of $N$ consecutive probe samples and a second array of $N$ consecutive response samples, respectively, with $N = G \cdot M$, $G$ being a non-zero positive integer;

(f) providing a Rayleigh response of the optical fiber (100) based on the first array of $N$ consecutive probe samples and the second array of consecutive $N$ response samples; and

(g) obtaining information indicative of the acoustic event by processing the Rayleigh response of the optical fiber (100).

8. The method according to claim 7, wherein step (d) comprises sampling the probe electrical signal ($A(t)$) and the response electrical signal ($B(t)$) synchronously.

9. The method according to claim 7 or 8, wherein step (e) comprises identifying the first array of $N$ consecutive probe samples and the second array of $N$ consecutive response samples in a time-misaligned way.

10. The method according to any of claims 7 to 9, wherein step (f) comprises:

   - applying a discrete-time Fourier transform to the first array of $N$ consecutive probe samples and to the second array of $N$ consecutive response samples, thereby obtaining arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$, respectively;
   - subjecting the arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$ to a point-wise ratio, thereby obtaining a further array $\hat{\boldsymbol{c}}$; and
   - applying an inverse discrete-time Fourier transform to the further array $\hat{\boldsymbol{c}}$.

11. The method according to claim 10, wherein subjecting the arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$ to the point-wise ratio comprises:

   - constructing two restricted arrays $\hat{\boldsymbol{a}}'$ and $\hat{\boldsymbol{b}}'$ by restricting each one of the arrays $\hat{\boldsymbol{a}} = [\hat{a}_0, \dots, \hat{a}_{N-1}]$ and $\hat{\boldsymbol{b}} = [\hat{b}_0, \dots, \hat{b}_{N-1}]$ to frequency values contained in their discrete frequency-domain support; and
   - obtaining the further array $\hat{\boldsymbol{c}}$ as $\hat{\boldsymbol{c}} = \hat{\boldsymbol{b}}' \oslash \hat{\boldsymbol{a}}'$ where $\oslash$ stands for Hadamard division.

12. The method according to any of claims 7 to 11, wherein step (g) comprises determining a spatial-domain Rayleigh response $h[m \cdot dz]$ of the optical fiber (100) and obtaining the information indicative of the acoustic event based on the spatial-domain Rayleigh response $h[m \cdot dz]$.

13. The method according to claim 12, wherein steps (d) to (g) are periodically iterated at discrete time instants, thereby providing a sequence of spatial-domain Rayleigh responses $h[m \cdot dz]$ equally spaced in time.

14. The method according to claim 13, wherein it further comprises applying a spectral correlation analysis to at least two spatial-domain Rayleigh responses $h[m \cdot dz]$ measured at different times $t_1$ and $t_2$.

**Patentansprüche**

1. Ein System (1000) zur Rayleigh-basierten verteilten akustischen Erfassung eines akustischen Ereignisses, wobei das System (1000) umfasst:

   - eine optische Faser (100);
   - eine Laserquelle (3), die so konfiguriert ist, dass sie ein Sondenlichtsignal a(t) in die optische Faser (100) einspeist, wobei das Sondenlichtsignal (a(t)) ein Lichtsignal ist, das periodisch mit einer Modulationsfrequenz $f_m$ moduliert wird; **dadurch gekennzeichnet, dass** es ferner umfasst
   - einen ersten optischen Detektor (4a), der so konfiguriert ist, dass er eine kohärente Detektion des in die optische Faser (100) eingekoppelten Sondenlichtsignals (a(t)) durchführt und dadurch ein elektrisches Sondensignal (A(t)) liefert, und einen zweiten optischen Detektor (4b), der so konfiguriert ist, dass er eine kohärente Detektion eines von der optischen Faser (100) emittierten Antwortlichtsignals (b(t)) durchführt, das als Reaktion auf das Probelichtsignal (a(t)) entsteht, das eine Rayleigh-Rückstreuung durch die optische Faser (100) durchläuft, wodurch ein elektrisches Antwortsignal (B(t)) bereitgestellt wird; und
   - eine Datenverarbeitungseinheit (7), die so konfiguriert ist, dass sie das elektrische Probesignal (A(t)) und das elektrische Antwortsignal (B(t)) mit einer Abtastfrequenz f abtastet, wobei $f_s = M_f/m$ gilt, wobei M eine von Null verschiedene positive ganze Zahl ist, wodurch ein abgetastetes Probesignal a[n • dt] und ein abgetastetes Antwortsignal b[n • dt] bereitgestellt werden; Identifizieren einer ersten Anordnung von N aufeinanderfolgenden Abtastwerten der Sonde und einer zweiten Anordnung von N aufeinanderfolgenden Abtastwerten der Antwort im abgetasteten Sondensignal a[n • dt] bzw. im abgetasteten Antwortsignal b[n • dt], wobei N = G • M, wobei G eine von Null verschiedene positive ganze Zahl ist; Bereitstellen einer Rayleigh-Antwort der optischen Faser (100) auf der Grundlage des ersten Arrays von N aufeinanderfolgenden Abtastwerten der Sonde und des zweiten Arrays von N aufeinanderfolgenden Abtastwerten der Antwort; und Erhalten von Informationen, die auf das akustische Ereignis hinweisen, durch Verarbeiten der Rayleigh-Antwort der optischen Faser (100).

2.  Das System (1000) nach Anspruch 1, wobei:

    - die Laserquelle (3) ferner so konfiguriert ist, dass sie dem ersten optischen Detektor (4a) und dem zweiten optischen Detektor (4b) ein unmoduliertes Lichtsignal (c(t)) zuführt, wobei das unmodulierte Lichtsignal (c(t)) eine Trägerfrequenz aufweist, die relativ zu einer Trägerfrequenz des Probelichtsignals (a(t)) verschoben ist; und
    - der erste optische Detektor (4a) und der zweite optische Detektor (4b) so konfiguriert sind, dass sie unter Verwendung des unmodulierten Lichtsignals (c(t)) jeweils eine Heterodyn-Kohärenzdetektion des Probelichtsignals (a(t)) und des Antwortlichtsignals (b(t)) durchführen.

3.  Das System (1000) nach Anspruch 2, wobei es ferner zwei Polarisationssteuerungen (11, 12) umfasst, die so konfiguriert sind, dass sie das unmodulierte Lichtsignal (c(t)) in jeweilige, zueinander orthogonale Polarisationszustände versetzen, und wobei der zweite optische Detektor (4b) zwei optische Detektoren (4b1, 4b2) umfasst, von denen jeder auf einen jeweiligen Polarisationszustand wirkt.

4.  Das System (1000) nach einem der vorstehenden Ansprüche, wobei es ferner einen optischen Verstärker (9) umfasst, der so konfiguriert ist, dass er die optische Leistung des Sondenlichtsignals (a(t)) erhöht, bevor dieses in die optische Faser (100) eingekoppelt wird.

5.  Das System (1000) nach einem der vorstehenden Ansprüche, wobei es ferner einen weiteren optischen Verstärker (9) umfasst, der so konfiguriert ist, dass er die optische Leistung des Antwortlichtsignals (b(t)) erhöht, bevor dieses vom zweiten optischen Detektor (4b) empfangen wird.

6.  Das System (1000) gemäß einem der vorstehenden Ansprüche, wobei das Sondenlichtsignal (a(t)) ein Lichtsignal ist, das periodisch mit nichtlinearer Modulation moduliert wird.

7.  Verfahren zur Rayleigh-basierten verteilten akustischen Erfassung eines akustischen Ereignisses, wobei das Verfahren umfasst:

    (a) Einspeisen eines Probelichtsignals (a(t)) in eine optische Faser (100), wobei das Probelichtsignal (a(t)) ein Lichtsignal ist, das periodisch mit einer Modulationsfrequenz fm moduliert ist;
    (b) Durchführen einer kohärenten Detektion des in die optische Faser (100) eingespeisten Probelichtsignals (a(t)), wodurch ein elektrisches Sondenlichtsignal (A(t)) bereitgestellt wird;
    (c) Durchführung einer kohärenten Detektion eines von der optischen Faser (100) emittierten Antwortlichtsignals (b(t)) als Reaktion auf das Sondenlichtsignal (a(t)), das eine Rayleigh-Rückstreuung durch die optische Faser (100) durchläuft, wodurch ein elektrisches Antwortsignal (B(t)) bereitgestellt wird;
    (d) Abtasten des elektrischen Probesignals (A(t)) und des elektrischen Antwortsignals (B(t)) mit einer Abtast-frequenz $f_s$, sodass $f_s = M f_m$ gilt, wobei M eine von Null verschiedene positive ganze Zahl ist, wodurch ein abgetastetes Probesignal a[n • dt] und ein abgetastetes Antwortsignal b[n • dt] bereitgestellt werden;
    (e) Identifizieren im abgetasteten Probesignal a[n • dt] und im abgetasteten Antwortsignal b[n • dt] eines ersten Arrays von N aufeinanderfolgenden Probe-Abtastwerten bzw. eines zweiten Arrays von N aufeinanderfolgenden Antwort-Abtastwerten, wobei N = G • M, wobei G eine von Null verschiedene positive ganze Zahl ist;
    (f) Bereitstellen einer Rayleigh-Antwort der optischen Faser (100) auf der Grundlage des ersten Arrays von N aufeinanderfolgenden Probenabtastwerten und des zweiten Arrays von N aufeinanderfolgenden Antwortabtastwerten; und
    (g) Erhalten von Informationen, die auf das akustische Ereignis hinweisen, durch Verarbeiten der Rayleigh-Antwort der optischen Faser (100).

8.  Verfahren nach Anspruch 7, wobei Schritt (d) das synchrone Abtasten des elektrischen Probesignals (A(t)) und des elektrischen Antwortsignals (B(t)) umfasst.

**9.** Verfahren nach Anspruch 7 oder 8, wobei Schritt (e) umfasst:
Das Identifizieren der ersten Reihe von N aufeinanderfolgenden Probe-Abtastwerten und der zweiten Reihe von N aufeinanderfolgenden Antwort-Abtastwerten in zeitlich nicht ausgerichteter Weise.

**10.** Verfahren nach einem der Ansprüche 7 bis 9, wobei Schritt (f) umfasst:

- Anwenden einer zeitdiskreten Fourier-Transformation auf das erste Array von N aufeinanderfolgenden Probesignalabtastwerten und auf das zweite Array von N aufeinanderfolgenden Antwortsignalabtastwerten, wodurch die Arrays $\hat{a}$ =[$\hat{a}_0$ ,..., $\hat{a}_{N-1}$] bzw. $\hat{\boldsymbol{b}}$ = [$\hat{b}_0$, ... , $\hat{b}_{N-1}$] erhalten werden;
- die Arrays $\hat{a}$ = [$\hat{a}_0$ ,..., $\hat{a}_{N-1}$] und $\hat{\boldsymbol{b}}$ = [$\hat{b}_0$, ... , $\hat{b}_{N-1}$] einer punktweisen Quotierung unterziehen, wodurch ein weiteres Array ^c erhalten wird; und
- eine inverse zeitdiskrete Fourier-Transformation auf das weitere Array ^c anwenden.

**11.** Verfahren nach Anspruch 10, wobei das Unterziehen der Arrays $\hat{a}$ =[$\hat{a}_0$ ,..., $\hat{a}_{N-1}$] und $\hat{\boldsymbol{b}}$ = [$\hat{b}_0$, ... , $\hat{b}_{N-1}$] einer punktweisen Relation umfasst:

- Konstruieren von zwei eingeschränkten Arrays $\hat{a}'$ und $\hat{\boldsymbol{b}}'$ durch Einschränken jedes der Arrays $\hat{a}$ =[$\hat{a}_0$ ,..., $\hat{a}_{N-1}$] und $\hat{\boldsymbol{b}}$ = [$\hat{b}_0$, ... , $\hat{b}_{N-1}$] auf die in ihrem diskreten Frequenzbereich enthaltenen Frequenzwerte; und
- Erhalten des weiteren Arrays $\hat{c}$ als $\hat{c}$= $\hat{\boldsymbol{b}}'$ $\oslash$ a', wobei $\oslash$ für die Hadamard-Division steht.

**12.** Verfahren nach einem der Ansprüche 7 bis 11, wobei Schritt (g) das Bestimmen einer Rayleigh-Antwort h[m • dz] im Raumbereich der optischen Faser (100) und das Ermitteln der das akustische Ereignis anzeigenden Information auf der Grundlage der Rayleigh-Antwort h[m • dz] im Raumbereich umfasst.

**13.** Verfahren nach Anspruch 12, wobei die Schritte (d) bis (g) periodisch zu diskreten Zeitpunkten wiederholt werden, wodurch eine Folge von räumlichen Rayleigh-Antworten h[m • dz] bereitgestellt wird, die zeitlich gleichmäßig beabstandet sind.

**14.** Verfahren nach Anspruch 13, wobei es ferner das Anwenden einer spektralen Korrelationsanalyse auf mindestens zwei Rayleigh-Antworten h[m • dz] im Raumbereich umfasst, die zu unterschiedlichen Zeitpunkten $t_1$ und $t_2$ gemessen wurden.

**Revendications**

**1.** Système (1000) de détection acoustique distribuée, basée sur Rayleigh, d'un événement acoustique, le système (1000) comprenant :

- une fibre optique (100) ;
- une source laser (3) configurée pour injecter un signal lumineux de sonde ($a(t)$) dans la fibre optique (100), le signal lumineux de sonde ($a(t)$) étant un signal lumineux modulé périodiquement avec une fréquence de modulation $f_m$ ; **caractérisé en ce qu'**il comprend en outre :
- un premier détecteur optique (4a) configuré pour effectuer une détection cohérente du signal lumineux de sonde ($a(t)$) tel qu'injecté dans la fibre optique (100), pour ainsi fournir un signal électrique de sonde ($A(t)$), et un second détecteur optique (4b) configuré pour effectuer une détection cohérente d'un signal lumineux de réponse ($b(t)$) émis par la fibre optique (100) en réponse au signal lumineux de sonde ($a(t)$) subissant une rétrodiffusion Rayleigh à travers la fibre optique (100), pour ainsi fournir un signal électrique de réponse ($B(t)$) ; et
- une unité de traitement de données (7) configurée pour échantillonner le signal électrique de sonde ($A(t)$) et le signal électrique de réponse ($B(t)$) avec une fréquence d'échantillonnage $f_s$ telle que $f_s = Mf_m$ où $M$ est un nombre entier positif non nul, pour ainsi fournir un signal de sonde échantillonné $a[n \cdot dt]$ et un signal de réponse échantillonné b[n · $dt$] ; identifier, dans le signal de sonde échantillonné $a[n \cdot dt]$ et le signal de réponse échantillonné $b[n \cdot dt]$, un premier tableau de $N$ échantillons de sonde consécutifs et un second tableau de $N$ échantillons de réponse consécutifs, respectivement, avec $N = G \cdot M$, $G$ étant un nombre entier positif non nul ; fournir une réponse Rayleigh de la fibre optique (100) sur la base du premier tableau de $N$ échantillons de sonde consécutifs et du second tableau de $N$ échantillons de réponse consécutifs ; et obtenir des informations indiquant l'événement acoustique par le traitement de la réponse Rayleigh de la fibre optique (100).

**2.** Système (1000) selon la revendication 1, dans lequel :

- la source laser (3) est en outre configurée pour fournir au premier détecteur optique (4a) et au second détecteur optique (4b) un signal lumineux non modulé (c(t)), le signal lumineux non modulé (c(t)) présentant une fréquence porteuse décalée par rapport à une fréquence porteuse du signal lumineux de sonde (a(t)) ; et

- le premier détecteur optique (4a) et le second détecteur optique (4b) sont configurés pour effectuer une détection cohérente hétérodyne du signal lumineux de sonde (a(t)) et du signal lumineux de réponse *(b(t))*, respectivement, en utilisant le signal lumineux non modulé (c(t)).

3. Système (1000) selon la revendication 2, dans lequel il comprend en outre deux contrôleurs de polarisation (11, 12) configurés pour amener le signal lumineux non modulé (c(t)) dans des états de polarisation respectifs orthogonaux l'un par rapport à l'autre, et dans lequel le second détecteur optique (4b) comprend deux détecteurs optiques (4b1, 4b2), chacun fonctionnant avec un état de polarisation respectif.

4. Système (1000) selon l'une quelconque des revendications précédentes, dans lequel il comprend en outre un amplificateur optique (9) configuré pour augmenter la puissance optique du signal lumineux de sonde (a(t)) avant qu'il ne soit injecté dans la fibre optique (100).

5. Système (1000) selon l'une quelconque des revendications précédentes, dans lequel il comprend en outre un amplificateur optique (9) supplémentaire configuré pour augmenter la puissance optique du signal lumineux de réponse (b(t)) avant qu'il ne soit reçu par le second détecteur optique (4b).

6. Système (1000) selon l'une quelconque des revendications précédentes, dans lequel le signal lumineux de sonde (*a*(*t*)) est un signal lumineux modulé périodiquement avec une modulation non linéaire.

7. Procédé de détection acoustique distribuée, basée sur Rayleigh, d'un événement acoustique, le procédé comprenant :

(a) l'injection d'un signal lumineux de sonde (a(*t*)) dans une fibre optique (100), le signal lumineux de sonde (a(*t*)) étant un signal lumineux modulé périodiquement avec une fréquence de modulation $f_m$ ;

(b) la mise en œuvre d'une détection cohérente du signal lumineux de sonde (a(*t*)) tel qu'injecté dans la fibre optique (100), pour ainsi fournir un signal électrique de sonde (A(*t*)) ;

(c) la mise en œuvre d'une détection cohérente d'un signal lumineux de réponse (b(*t*)) émis par la fibre optique (100) en réponse au signal lumineux de sonde (a(*t*)) subissant une rétrodiffusion Rayleigh à travers la fibre optique (100), pour ainsi fournir un signal électrique de réponse (B(*t*)) ;

(d) l'échantillonnage du signal électrique de sonde (A(*t*)) et du signal électrique de réponse (B(*t*)) avec une fréquence d'échantillonnage $f_s$ telle que $f_s = M f_m$ où $M$ est un nombre entier positif non nul, pour ainsi fournir un signal de sonde échantillonné $a[n \cdot dt]$ et un signal de réponse échantillonné $b[n \cdot dt]$ ;

(e) l'identification dans le signal de sonde échantillonné $a[n \cdot dt]$ et le signal de réponse échantillonné $b[n \cdot dt]$ d'un premier tableau de $N$ échantillons de sonde consécutifs et d'un second tableau de $N$ échantillons de réponse consécutifs, respectivement, avec $N = G \cdot M$, $G$ étant un nombre entier positif non nul ;

(f) la fourniture d'une réponse Rayleigh de la fibre optique (100) sur la base du premier tableau de $N$ échantillons de sonde consécutifs et du second tableau de $N$ échantillons de réponse consécutifs ; et

(g) l'obtention d'informations indiquant l'événement acoustique par le traitement de la réponse Rayleigh de la fibre optique (100).

8. Procédé selon la revendication 7, dans lequel l'étape (d) comprend l'échantillonnage synchronisé du signal électrique de sonde (A(*t*)) et du signal électrique de réponse (B(*t*)).

9. Procédé selon la revendication 7 ou 8, dans lequel l'étape (e) comprend l'identification du premier tableau de $N$ échantillons de sonde consécutifs et du second tableau de $N$ échantillons de réponse consécutifs de manière désynchronisée dans le temps.

10. Procédé selon l'une quelconque des revendications 7 à 9, dans lequel l'étape (f) comprend :

- l'application d'une transformée de Fourier en temps discret au premier tableau de $N$ échantillons de sonde consécutifs et au second tableau de $N$ échantillons de réponse consécutifs, pour ainsi obtenir respectivement les tableaux $\hat{\boldsymbol{a}} = [\hat{a}_0, \dots, \hat{a}_{N-1}]$ et $\hat{\boldsymbol{b}} = [\hat{b}_0, \dots, \hat{b}_{N-1}]$, ;

- la soumission des tableaux $\hat{\boldsymbol{a}} = [\hat{a}_0, \dots, \hat{a}_{N-1}]$ et $\hat{\boldsymbol{b}} = [\hat{b}_0, \dots, \hat{b}_{N-1}]$, à un rapport point par point, pour ainsi obtenir un tableau $\hat{\boldsymbol{c}}$ supplémentaire ; et

- l'application d'une transformée de Fourier inverse en temps discret au tableau $\hat{c}$ supplémentaire.

11. Procédé selon la revendication 10, dans lequel le fait de soumettre les tableaux $\hat{a} = [\hat{a}_0, ..., \hat{a}_{N-1}]$ et $\hat{b} = [\hat{b}_0, ..., \hat{b}_{N-1}]$, au rapport point par point comprend :

   - la construction de deux tableaux $\hat{a}'$ et $\hat{b}'$ restreints en limitant chacun des tableaux $\hat{a} = [\hat{a}_0, ..., \hat{a}_{N-1}]$ et $\hat{b} = [\hat{b}_0, ..., \hat{b}_{N-1}]$, aux valeurs de fréquence contenues dans leur support fréquentiel discret ; et
   - l'obtention du tableau $\hat{c}$ supplémentaire sous la forme $\hat{c} = \hat{b}' \oslash \hat{a}'$ où $\oslash$ représente la division de Hadamard.

12. Procédé selon l'une quelconque des revendications 7 à 11, dans lequel l'étape (g) comprend la détermination d'une réponse Rayleigh dans le domaine spatial $h[m \cdot dz]$ de la fibre optique (100) et l'obtention des informations indiquant l'événement acoustique sur la base de la réponse Rayleigh dans le domaine spatial $h[m \cdot dz]$.

13. Procédé selon la revendication 12, dans lequel les étapes (d) à (g) sont itérées périodiquement à des instants discrets, pour ainsi fournir une séquence de réponses Rayleigh dans le domaine spatial $h[m \cdot dz]$ espacées uniformément dans le temps.

14. Procédé selon la revendication 13, dans lequel il comprend en outre l'application d'une analyse de corrélation spectrale à au moins deux réponses Rayleigh dans le domaine spatial $h[m \cdot dz]$ mesurées à des instants $t_1$ et $t_2$ différents .

## Fig. 1 (prior art)

## Fig. 2

start

sample
$A(t), B(t)$ — 301

identify two arrays
of $N$ samples — 302

obtain Rayleigh reponse from two
arrays of $N$ samples — 303

obtain information on acoustic event
by processing Rayleigh response — 304

no — end of
measurement
session? — 305

yes

end

## Fig. 3

## Fig. 4A

202

3

$a(t)$

5    9    10    6

to 100

$c(t)$

$a(t)$

$b(t)$

8

$c(t)$

$c(t)$

4a

4b

$A(t)$

$B(t)$

7

# Fig. 4B

EP 4 553 455 B1

Fig. 4C

23

Fig. 4D

## Fig. 5

## Fig. 6

start

perform $R$ measurements of
spatial-domain Rayleigh response — 801

select $N_w$ spatial
windows — 802

apply discrete-time Fourier transform
to $F$ points — 803

calculate cross-correlations — 804

extract information indicative of
acoustic event — 805

806

end of
measurement
session?

no

yes

end

## Fig. 7

Fig. 8

<u>Fig. 9</u>

## REFERENCES CITED IN THE DESCRIPTION

**Patent documents cited in the description**

- WO 2022229616 A

**Non-patent literature cited in the description**

- **Z. HE** ; **Q. LIU**. Optical Fiber Distributed Acoustic Sensors: A Review. *Journal of Lightwave Technology*, 15 June 2021, vol. 39 (12), 3671-3686

- **S. T. KREGER et al.** High Resolution Distributed Strain or Temperature Measurements in Single-and Multimode Fiber Using Swept-Wavelength Interferometry. *Optical Fiber Sensors*